# EUROPÄISCHE PATENTSCHRIFT

(11) **EP 2 165 343 B1**
(45) Veröffentlichungstag und Bekanntmachung des Hinweises auf die Patenterteilung: **03.11.2010**
(21) Anmeldenummer: 08761331.1
(22) Anmeldetag: 24.06.2008
(51) Int. Cl.: H01G 2/08

(54) **ELEKTRISCHES SPEICHERMODUL MIT KÜHLKÖRPERN**
ELECTRIC MEMORY MODULE WITH COOLING BODIES
MODULE MÉMOIRE ÉLECTRIQUE ET SON REFROIDISSEUR

(30) Priorität: 28.06.2007 DE 102007029851
(43) Veröffentlichungstag der Anmeldung: 24.03.2010
(73) Patentinhaber: Siemens Aktiengesellschaft, 80333 München (DE)
(72) Erfinder: RECHENBERG, Karsten, 91077 Dormitz (DE)
(86) Internationale Anmeldenummer: PCT/EP2008/058017
(87) Internationale Veröffentlichungsnummer: WO 2009/000833

(56) Entgegenhaltungen:
- DE-A1- 1 464 556
- DE-A1- 2 511 010
- FR-A- 2 863 400
- US-A- 5 214 564

## Beschreibung

Die Erfindung bezieht sich auf ein elektrisches Speichermodul mit den Merkmalen gemäß dem Oberbegriff des Anspruchs 1.

Ein derartiges Speichermodul ist aus der französischen Offenlegungsschrift FR 2 863 400 bekannt. Das Speichermodul weist Kondensatoren auf, die durch Kühlkörper elektrisch miteinander verschaltet sind. Das Speichermodul wird nach außen durch einen isolierenden Deckel und eine isolierende Bodenplatte isoliert, um eine Montage an einem Schienenfahrzeug zu ermöglichen.

Aus der US-Patentschrift US 5,214,564 ist ein anderes Speichermodul mit Kondensatoren und Kühlkörpern bekannt; dieses Speichermodul ist dazu gedacht, auf einer Leiterplatte montiert zu werden. Zur elektrischen Isolation der Kühlkörper wird zwischen die Kühlkörper und die Kondensatoren eine isolierende zwischenplatte eingesetzt.

Darüber hinaus ist aus der deutschen Offenlegungsschrift DE 1 464 556 ein Speichermodul mit Wasserkühlung bekannt.

Die Lebensdauer von Kondensatoren, insbesondere von Doppelschichtkondensatoren, wird im Wesentlichen durch die thermische Belastung begrenzt, der die Kondensatoren während ihres Betriebes ausgesetzt sind.

Davon ausgehend liegt der Erfindung die Aufgabe zugrunde, ein Speichermodul anzugeben, das bauartbedingt eine besonders hohe Lebensdauer aufweisen kann.

Diese Aufgabe wird erfindungsgemäß durch ein Speichermodul mit den Merkmalen gemäß Patentanspruch 1 gelöst. Vorteilhafte Ausgestaltungen des erfindungsgemäßen Speichermoduls sind in Unteransprüchen angegeben.

Danach ist erfindungsgemäß vorgesehen, dass außen auf den Kühlkörpern eine elektrisch isolierende Schicht aufgebracht ist, die das Speichermodul elektrisch nach außen isoliert.

Ein wesentlicher Vorteil des erfindungsgemäßen Speichermoduls ist darin zu sehen, dass dieses eine sehr gute Wärmeabfuhr ermöglicht, wodurch die Lebensdauer des Speichermoduls - verglichen zu vorbekannten Speichermodulen - sehr groß ist. Die elektrische Verbindungseinrichtung bzw. die elektrischen Verbindungseinrichtungen, die die elektrische Verschaltung der Kondensatoren bewirken, weisen erfindungsgemäß eine Doppelfunktion auf, nämlich eine elektrische Funktion und eine thermische Funktion. So dienen die Verbindungseinrichtungen einerseits zum elektrischen Verschalten der Kondensatoren, wodurch das vom Speichermodul gewünschte elektrische Verhalten, also beispielsweise hinsichtlich der Speicherkapazität und/oder der Ausgangsspannung, eingestellt wird; gleichzeitig dienen die Verbindungseinrichtungen auch als Kühlkörpern und kühlen die Kondensatoren, wodurch eine relativ geringe Betriebstemperatur sichergestellt werden kann.

Auch die erfindungsgemäß vorgesehene Lage der elektrischen Isolierung spielt eine wichtige Rolle: So ist nämlich erfindungsgemäß vorgesehen, dass die elektrischen Isolierung des elektrischen Speichermoduls außen auf den Kühlkörpern aufgebracht wird, so dass die elektrische Isolierung keinen Wärmewiderstand zwischen Kühlkörper und Kondensatoren bilden kann. Insgesamt unterscheidet sich das erfindungsgemäße Speichermodul somit erheblich von vorbekannten Speichermodulen, bei denen die elektrische Isolierung zwischen den Kondensatoren und den Kühlkörpern bzw. zwischen den Verbindungseinrichtungen und den Kühlkörpern angeordnet ist und dadurch die Wärmeabfuhr von den Kondensatoren zu den Kühlkörpern erschwert.

Zusammengefasst wird bei dem erfindungsgemäßen Speichermodul eine sehr wirkungsvolle Wärmeabfuhr durch die erfindungsgemäße Kombination der Anordnung der elektrischen Isolierung außen auf den Kühlkörpern mit der Doppelnutzung der Verbindungseinrichtungen, nämlich einerseits als Kühlkörper und andererseits als Verschaltungselement, erreicht.

Die elektrische Isolierung kann beispielsweise aus einer anorganischen Schicht, wie beispielsweise aus einem Oxid (z.B. Aluminiumoxid), oder aus einer organischen Schicht, wie beispielsweise einem Lack oder dergleichen, bestehen.

Vorzugsweise werden auch die Zwischenräume zwischen den Kühlkörpern zumindest abschnittsweise durch elektrisches Isoliermaterial gefüllt, um etwaige Kurzschlüsse zu vermeiden

Das elektrische Isoliermaterial in den Zwischenräumen zwischen den Kondensatoren kann beispielsweise durch eine Schicht desselben Materials gebildet sein, das auch außen auf den Kühlkörpern als elektrischen Isolierung aufgebracht ist. Bei dieser Ausgestaltung dient die elektrische Isolierung also zum äußeren Isolieren des Speichermoduls sowie gleichzeitig auch zum Isolieren der Kühlkörper bzw. der Verbindungseinrichtungen untereinander.

Die Erfindung wird nachfolgend anhand eines Ausführungsbeispiels näher erläutert; dabei zeigen beispielhaft:
- Figur 1: zur allgemeinen Erläuterung des Hintergrundes der Er- findung ein nicht beanspruchtes Speichermodul, bei dem Kühlkörper und leitfähige Verbindungseinrichtun- gen voneinander durch eine elektrische Isolierung ge- trennt sind, und
- Figur 2: ein Ausführungsbeispiel für ein erfindungsgemäßes Speichermodul.

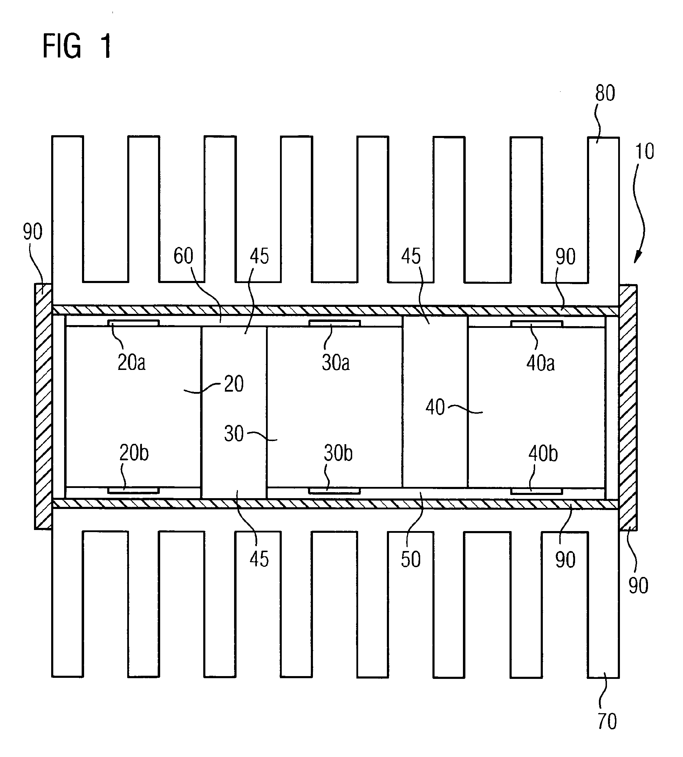

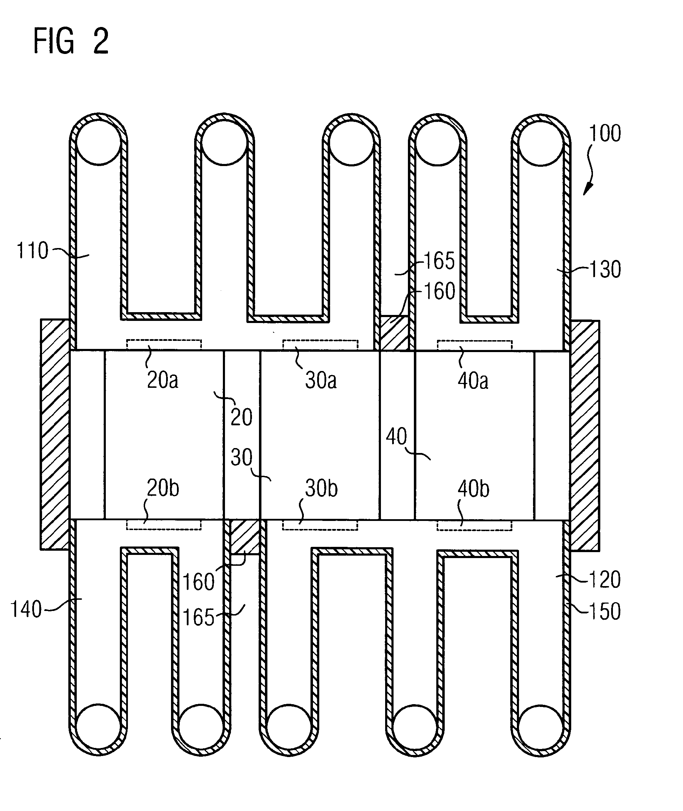

In den Figuren 1 und 2 werden der Übersicht halber für identische oder vergleichbare Komponenten dieselben Bezugszeichen verwendet.

In der Figur 1 sieht man ein elektrisches Speichermodul, das mit dem Bezugszeichen 10 gekennzeichnet ist. Es lässt sich erkennen, dass das Speichermodul 10 drei Kondensatoren 20, 30 und 40 aufweist, die beispielsweise durch Doppelschichtkondensatoren gebildet sein können und durch Isolationsmaterial, beispielsweise auch Luft, 45 voneinander getrennt sind. Jeder Kondensator 20, 30 und 40 weist jeweils zwei Anschlüssen auf, die in der Figur 1 mit den Bezugszeichen 20a, 30a, 40a sowie 20b, 30b und 40b gekennzeichnet sind.

Die drei Kondensatoren sind beispielsweise elektrisch in Reihe geschaltet; hierzu dienen zwei elektrisch leitfähige Verbindungseinrichtungen 50 und 60. Die elektrische Verbindungseinrichtung 50 verbindet die Anschlüsse 30b und 40b der beiden Kondensatoren 30 und 40. Die Verbindungseinrichtung 60 verbindet die Anschlüsse 20a und 30a der beiden Kondensatoren 20 und 30, wodurch eine Reihenschaltung der drei Kondensatoren erreicht wird.

Bei dem Speichermodul 10 gemäß Figur 1 sind darüber hinaus zwei Kühlkörper vorhanden, nämlich ein Kühlkörper 70 und ein Kühlkörper 80. Die beiden Kühlkörper 70 und 80 sind durch eine die Kondensatoren einhüllende elektrische Isolierung 90 von den Kondensatoren und damit von den elektrisch leitfähigen Verbindungseinrichtungen 50 und 60 getrennt.

Während des Betriebs des Speichermoduls 10 wird eine effiziente Wärmeabfuhr von den Kondensatoren 20, 30 und 40 zu den Kühlkörpern 70 und 80 durch die elektrische Isolierung 90 behindert, da diese nämlich einen zusätzlichen thermischen Widerstand zwischen den Kühlkörpern und den Kondensatoren bewirkt. Durch diesen zusätzlichen thermischen Widerstand wird die Temperatur der Kondensatoren während des Betriebs erhöht und deren Lebensdauer insgesamt reduziert.

In der Figur 2 ist ein Ausführungsbeispiel für ein erfindungsgemäßes elektrisches Speichermodul dargestellt. Dieses Speichermodul trägt das Bezugszeichen 100.

Wie sich in der Figur 2 erkennen lässt, sind die Anschlüsse 20a und 30a der beiden Kondensatoren 20 und 30 durch eine elektrisch leitfähige Verbindungseinrichtung 110 verbunden, die gleichzeitig auch einen Kühlkörper bildet.

Auch die beiden Anschlüsse 30b und 40b der beiden Kondensatoren 30 und 40 sind durch eine Verbindungseinrichtung verbunden, die eine Doppelfunktion aufweist und gleichzeitig auch als Kühlkörper dient. Diese Verbindungseinrichtung bzw. dieser Kühlkörper ist in der Figur 2 mit dem Bezugszeichen 120 gekennzeichnet.

Darüber hinaus erkennt man in der Figur zwei weitere Kühlkörper 130 und 140, die mit den Anschlüssen 20b sowie 40a der Kondensatoren 20 und 40 in Verbindung stehen.

Da die Kühlkörper 110, 120, 130 und 140 elektrisch unmittelbar mit Anschlüssen der Kondensatoren 20, 30 und 40 in Verbindung stehen, wird zu deren äußerer Isolation eine elektrische Isolierung 150 eingesetzt, die außen auf den Kühlkörpern aufgebracht ist. Die elektrische Isolierung 150 bildet somit die äußere Schicht des Speichermoduls 100.

Die elektrische Isolierung 150 kann beispielsweise durch eine anorganische oder organische Schicht (z. B. aus Oxid-Material wie Aluminiumoxid oder aus Lack, etc.) gebildet sein, die auf den Kühlkörpern aufgebracht ist.

Zur elektrischen Trennung der Kühlkörper untereinander ist darüber hinaus elektrisches Isoliermaterial 160 vorgesehen, das in Zwischenräumen 165 zwischen den Kühlkörpern 110 und 130 sowie zwischen den beiden Kühlkörpern 120 und 140 angeordnet ist. Das elektrische Isoliermaterial 160 kann aus dem gleichen Material bestehen wie die elektrische Isolierung 150 auf den Kühlkörpern 110 bis 140.

Während des Betriebes des elektrischen Speichermoduls 100 wird eine effiziente Wärmeabfuhr aus dem Bereich der Kondensatoren 20, 30 und 40 gewährleistet, weil die Kondensatoren unmittelbar mit den Kühlkörpern 110, 120, 130 und 140 verbunden sind, nämlich sowohl elektrisch als auch thermisch; denn es ist kein zusätzlicher thermischer Widerstand zwischen den Kühlkörpern und den Kondensatoren vorhanden. Zwar weist auch das Speichermodul 100 gemäß Figur 2 eine elektrische Isolierung auf, die eine elektrische Isolation der Kondensatoren nach außen bewirkt; im Unterschied zu dem Speichermodul 10 gemäß Figur 1 ist diese Isolation jedoch nicht zwischen den Kühlkörpern und den Kondensatoren, sondern außen an den Kühlkörpern angebracht, wodurch eine insgesamt bessere Wärmeabfuhr erreicht wird.

## Patentansprüche

1. Elektrisches Speichermodul (100) mit zumindest zwei Kondensatoren (20, 30, 40), die durch Kühlkörper (110, 120) elektrisch miteinander verschaltet sind, wobei das Speichermodul elektrisch isoliert ist,
**dadurch gekennzeichnet, dass**
außen auf den Kühlkörpern (110, 120) eine elektrisch isolierende Schicht aufgebracht ist, die das Speichermodul elektrisch nach außen isoliert.

2. Speichermodul nach Anspruch 1, **dadurch gekennzeichnet, dass** die Kühlkörper Kühlrippen aufweisen und die elektrisch isolierende Schicht außen auf den Kühlrippen aufgebracht ist.

3. Speichermodul nach einem der voranstehenden Ansprüche, **dadurch gekennzeichnet, dass** Zwischenräume (165) zwischen den Kühlkörpern durch elektrisches Isoliermaterial (160) zumindest abschnittsweise gefüllt sind, wobei das elektrische Isoliermaterial (160) in den Zwischenräumen (165) aus demselben Material besteht, das außen auf den Kühlkörpern als elektrisch isolierende Schicht aufgebracht ist.

4. Speichermodul nach einem der voranstehenden Ansprüche, **dadurch gekennzeichnet, dass** die elektrische Isolierung eine anorganische Schicht aufweist.

5. Speichermodul nach einem der voranstehenden Ansprüche, **dadurch gekennzeichnet, dass** die elektrische Isolierung eine organische Schicht aufweist.

## Claims

1. Electrical storage module (100) having at least two capacitors (20, 30, 40) which are electrically connected to one another by means of heat sinks (110, 120), with the storage module being electrically insulated,
**characterized in that**
an electrically insulating layer is applied externally to the heat sinks (110, 120) and electrically insulates the storage module on the outside.

2. Storage module according to Claim 1, **characterized in that** the heat sinks have cooling ribs, and the electrically insulating layer is applied externally to the cooling ribs.

3. Storage module according to one of the preceding claims, **characterized in that** intermediate spaces (165) between the heat sinks are filled at least in places with electrical insulating material (160), wherein the electrical insulating material (160) in the intermediate spaces (165) is composed of the same material as that which is applied externally as an electrically insulating layer to the heat sinks.

4. Storage module according to one of the preceding claims, **characterized in that** the electrical insulation has an inorganic layer.

5. Storage module according to one of the preceding claims, **characterized in that** the electrical insulation has an organic layer.

## Revendications

1. Module ( 100 ) électrique de mémoire, comprenant au moins deux condensateurs ( 20, 30, 40 ), qui sont connectés électriquement les uns avec les autres par des dissipateurs ( 110, 120 ) de chaleur, le module de mémoire étant isolé électriquement,
**caractérisé en ce que**
une couche isolante du point de vue électrique, qui isole le module de mémoire électriquement vers l'extérieur, est déposée à l'extérieur sur les dissipateurs ( 110, 120 ) de chaleur.

2. Module de mémoire suivant la revendication 1,
**caractérisé**
**en ce que** les dissipateurs de chaleur ont des ailettes de refroidissement et la couche isolante du point de vue électrique est déposée à l'extérieur sur les ailettes de refroidissement.

3. Module de mémoire suivant l'une des revendications précédentes,
**caractérisé**
**en ce que** des espaces ( 165 ) intermédiaires, entre les dissipateurs de chaleur, sont remplis, au moins par endroit, de matériau ( 160 ) isolant du point de vue électrique, le matériau ( 160 ) isolant du point de vue électrique étant constitué dans les espaces ( 165 ) intermédiaires du même matériau que celui qui est disposé à l'extérieur sur les dissipateurs de chaleur en tant que couche isolante du point de vue électrique.

4. Module de mémoire suivant l'une des revendications précédentes,
**caractérisé**
**en ce que** l'isolant électrique comporte une couche minérale.

5. Module de mémoire suivant l'une des revendications précédentes,
**caractérisé**
**en ce que** l'isolant électrique comporte une couche organique.
